# EUROPEAN PATENT APPLICATION

(11) **EP 4 512 698 A1**
(43) Date of publication of application: **26.02.2025**
(21) Application number: 23193335.9
(22) Date of filing: 24.08.2023
(51) Int. Cl.: B62D 25/00, B62D 25/02, B62D 29/00

(54) **REINFORCING MEMBER FOR HOLLOW STRUCTURAL MEMBERS**

(71) Applicant: Sika Technology AG, 6340 Baar (CH)
(72) Inventor: MEIER, Michael, 5443 Niederrohrdorf (CH); NIGGEMANN, Stephan, 32839 Steinheim (DE); SHEHU, Ardi, 3111 Wezemaal (BE)
(74) Representative: Sika Patent Attorneys

(57) **Abstract**

A structural reinforcing member (100) for reinforcing a hollow structural member (11, 12, 13, 14, 15) of a vehicle body (10) comprises a hollow body (110), whereby:
- the hollow body (110) comprises a cavity (111) that is confined by a front wall (115), a back wall (114), a top wall (112), a bottom wall (113), and a side wall (116);
- the hollow body (110) at a side of the side wall (116) is partly or fully closed by the side wall (116) and at a side (117) opposite the side wall (116) is open;
- and the hollow body (110) comprises ribs (121a - d, 122a) which run between opposing walls, such that the cavity (111) is divided into several subcavities (111a - j), especially extending form the side wall (116) to the open side (117) opposite the side wall (116);
- at least on the side wall (116), an activatable material (130) is arranged for adhesively bonding the reinforcing member (100) to a hollow structural member (15).

## Description

### Technical field

The invention relates to a reinforcing member for reinforcing a hollow structural member of a vehicle body as well as to a hollow structural member and to a vehicle body comprising the reinforcing member. Furthermore, the invention is related the use of the reinforcing member to reinforce a hollow structural member of a vehicle body.

### Background art

Structural members such as, for example, bodies and/or chassis of transportation and conveyance means, in particular of aquatic or terrestrial vehicles or of aircraft, in many instances have hollow structures having cavities in order for lightweight constructions to be enabled. However, such bodies and/or chassis may be subject to various forces resulting for example from weight of passengers and cargo, accelerations, uneven roads, collisions, or combinations thereof. Therefore, it is often desirable for the cavities and thus the hollow structures to be substantially reinforced but for the low weight to be maintained.

In this regard, especially with electrically driven vehicles, in recent years sill structures became more and more important in side crash events because of batteries in the floor structure. This has led to more advanced sill concepts based on aluminum profiles with local structural inserts made of steel or synthetic materials.

For example, WO 2020/247903 A1 (Zephyros Inc.) describes a carrier to reinforce a frame of a vehicle comprising a periphery having: an outer edge, arranged distally along a transverse axis of the carrier, configured to be oriented away from a frame enclosure of a vehicle, an inner edge, arranged distally along the transverse axis, configured to be oriented toward the frame enclosure of the vehicle, and distal ends arranged opposite each other along a longitudinal axis of the carrier; one or more series of ribs having: a cross-sectional pattern, and an orientation along the longitudinal axis, the transverse axis, or both.

However, existing structural reinforcing members often are rather heavy, difficult to install and produce or the performance per weight is insufficient.

Thus, there is still a need for new and improved solutions that overcome the aforementioned disadvantages as far as possible.

### Disclosure of the invention

It is an object of the present invention to provide an improved solution for reinforcing vehicle bodies. Especially, the solutions should provide improved reinforcing members for reinforcing hollow structural members, in particular sill structures, of a vehicle body. In particular, the reinforcing member should be as lightweight and strong as possible. Furthermore, the reinforcing member should be inexpensive to produce and easy to install.

Surprisingly, it has been found that this object can be achieved by the features of claim 1. Thus, the core of the present invention is related to a structural reinforcing member for reinforcing a hollow structural member of a vehicle body, whereby the reinforcing member comprises or consists of a hollow body, whereby:
- the hollow body comprises a cavity that is confined by a front wall, a back wall, a top wall, a bottom wall, and a side wall;
- the hollow body at a side of the side wall is partly or fully closed by the side wall and at a side opposite the side wall is open;
- and the hollow body comprises ribs which run between opposing walls, such that the cavity is divided into several subcavities, especially extending form the side wall to the open side opposite the side wall;
- at least on the side wall, an activatable material is arranged for adhesively bonding the reinforcing member to a hollow structural member.

As it turned out, the structural reinforcing member according to the invention has a surprisingly good reinforcing effect with respect to its weight. Thus, the performance per weight is at a very high level.

It is believed that this is due to the combination of (i) the special structure with the walls enclosing the cavity of the hollow body at five sides while at one side the hollow body is open, (ii) the ribs dividing the cavity into several subcavities, and (iii) the activatable material that is specially arranged at least on the side wall. Overall, this results in a highly stable structure that can be fixed selectively and locally to a hollow structural member of a vehicle body in a targeted and reliable manner with a minimum activatable material.

Furthermore, the structural reinforcing member according to the invention can be produced at low cost, e.g. by injection molding.

Especially, the structural reinforcing member according to the invention turned out to be very beneficial as local reinforcement in sill structures, e.g. in the area of crossmembers. Thereby, in case of pole impact events, acting forces can be optimally absorbed.

Additional aspects of the invention are subject of further independent claims. Particularly preferred embodiments are outlined throughout the description and the dependent claims.

### Ways of carrying out the invention

A first aspect of the present invention is directed to a structural reinforcing member for reinforcing a hollow structural member of a vehicle body, whereby the reinforcing member comprises or consists of a hollow body, whereby:
- the hollow body comprises a cavity that is confined by a front wall, a back wall, a top wall, a bottom wall, and a side wall;
- the hollow body at a side of the side wall is partly or fully closed by the side wall and at a side opposite the side wall is open;
- and the hollow body comprises ribs which run between opposing walls, such that the cavity is divided into several subcavities, especially extending form the side wall to the open side opposite the side wall;
- at least on the side wall, an activatable material is arranged for adhesively bonding the reinforcing member to a hollow structural member.

In the present context, the terms "essentially parallel" or "essentially plane parallel" means configurations that do not deviate by more than +/- 10°, especially +/- 5°, in particular +/- 1° from the fully parallel/plane parallel alignment. Likewise "essentially perpendicular" means configurations that do not deviate by more than +/- 10°, especially +/- 5°, in particular +/- 1° from the fully perpendicular arrangement.

In particular, the hollow body is configured such that in two directions of space the cavity is confined by the front wall, back wall, top wall, and bottom wall and in the remaining direction of space the cavity is confined by the side wall and opposite the side wall the cavity is open.

In particular, the walls of the hollow body can be planar, curved and/or stepped. Especially, the walls are essentially planar.

According to a preferred embodiment, the front wall, back wall, top wall, and bottom wall each abuts an outer peripheral edge of the side wall with one of their edges. This results in a highly compact and stable wall structure.

The side wall preferably is oriented essentially perpendicular to the front wall, back wall, top wall, and/or bottom wall, especially to all these walls.

Further preferred, the front wall is spaced from the back wall and arranged opposite the front wall, in particular essentially plane parallel to the front wall and/or the top wall is spaced from the bottom wall and arranged opposite the bottom wall, in particular essentially plane parallel to the bottom wall.

Specifically, a first outer edge of the front wall preferably abuts a first outer edge of the top wall, in particular to form a first common peripheral edge of the hollow body, and a second outer edge of the front wall abuts a first outer edge of the bottom wall, in particular to form a second common peripheral edge of the hollow body; and/or a first outer edge if the back wall preferably abuts a second outer edge of the top wall, in particular to form a third common peripheral edge of the hollow body and a second outer edge of the back wall abuts a second outer edge of the bottom wall, in particular to form a fourth common peripheral edge of the hollow body; and/or a first outer edge of the side wall preferably abuts a third outer edge of the top wall, in particular to form a fifth common peripheral edge of the hollow body; and/or a second outer edge of the side wall preferably abuts a third outer edge of the bottom wall, in particular to form a sixth common peripheral edge of the hollow body; and/or a third outer edge of the side wall preferably abuts a third outer edge of the front wall, in particular to form a seventh common peripheral edge of the hollow body; and/or a fourth outer edge of the side wall preferably abuts a third outer edge of the back wall, in particular to form an eighth common peripheral edge of the hollow body.

Especially, the front wall and back wall are arranged in first parallel planes and the top wall and the bottom wall are arranged in second parallel, where the first parallel planes and the second parallel planes are oriented essentially perpendicular.

Preferably, each of the front wall, back wall, top wall, and/or bottom wall is at least partly, especially fully closed. Partly closed in particular means that at least 50%, in particular at least 75% of the wall area is closed.

Especially, the hollow body has an essentially cuboid shape, especially an essentially rectangular cuboid shape. Thereby, the walls define an out periphery of the hollow body.

According to a preferred embodiment, the activatable material covers at least 50%, especially at least 75%, in particular 100%, of the area of the side wall. For example, the activatable material covers 50 to 100%, especially 60 to 90%, in particular 70 to 80%, of the area of the side wall.

This allows for a strong connection between the reinforcing member and the hollow structural member to be reinforced. An arrangement on the side wall, which usually is arranged in parallel and in contact with an inner surface of the hollow structural member to be reinforced, prevents translational movements of the reinforcing member upon exertion of forces. This is in particular important when the reinforcing member is used as local reinforcement in sill structures and when pole impact events occur.

Preferably, the activatable material is provided as one-piece of material. This results in a highly reliable connection with the hollow structural member and simplifies production of the reinforcing member, e.g. by injection molding.

In a further preferred embodiment, further activatable material is arranged on the bottom wall and/or the top wall, and, preferably, all the activatable material is provided as one-piece of material. Such a configuration is beneficial since it reduces unwanted tilting movements of the reinforcing member in the hollow structural member upon exertion of forces, e.g. when pole impact events occur in sill structures.

Especially preferred, only the side wall, and optionally the bottom wall and/or the top wall, has the activatable material. In a special embodiment, only the side wall has the activatable material. This allows for reducing the overall weight of the reinforcing member. Nevertheless, a secure connection between reinforcing member and the hollow structural member can be ensured.

Especially, the ribs are arranged essentially perpendicular to the side wall. Thereby, preferably, one or more first ribs run in parallel to the top wall and/or the bottom wall and one or more second ribs run in parallel to the front wall and/or the back wall.

The ribs are in particular arranged such that the subcavities extend form the side wall to the open side opposite the side wall. This means in particular, each subcavity forms a continuous hollow subspace reaching from the side wall to the open side. Thereby, especially, a cross-section of the subcavities is essentially constant from the side wall to the open side.

Further preferred, the ribs are arranged such that a longitudinal axis of the subcavities is essentially perpendicular to the side wall. The longitudinal axis of the subcavities in particular is the axis running from the side wall to the open side opposite the side wall, especially the longitudinal axis is essentially perpendicular to the side wall.

Also, the ribs preferably are arranged such that the subcavities are open on the side opposite the side wall.

According to a preferred embodiment, the ribs are arranged such that cuboid subcavities are formed.

A distance between neighboring ribs preferably is from 5 - 100 mm, especially 15 - 50 mm and/or an average thickness of the ribs is from 0.5 - 10 mm, especially 1.5 - 6 mm. Especially with respect to applications in vehicle sills, this results in an optimal structural reinforcement at a rather low weight.

Especially, viewed in a direction from the open side, the subcavities form a rectangular or a honeycomb network.

According to an especially preferred embodiment, the ribs are unevenly distributed in order to produce at least two types of subcavities with different volumes. Thereby, at least in one direction of space, e.g., in a direction from the back wall to the front wall, a distance between neighboring ribs next to the front wall and/or the back wall is smaller than a distance between neighboring ribs in a central section of the cavity.

Further preferred, the ribs are arranged such that subcavities in a central section between the front wall and the back wall have a larger volume than subcavities that are adjacent to the front wall and/or the back wall.

Also, it is possible that the ribs are arranged such that subcavities next to the bottom wall have a larger volume than subcavities next to the top wall or vice versa.

With such configurations, edge sections of the reinforcing member can be strengthened resulting in an overall improvement of the strength of the reinforcing member.

In another preferred embodiment, at least in one of the subcavities, in particular in at least 50% of all subcavities, especially in each subcavity, there is an opening in the side wall. Especially the opening(s) is/are located in between neighboring ribs.

Thus, in this case, there is an opening in a bottom area of the at least one subcavity or in each of the bottom areas of the several subcavities having an opening. Especially, the opening(s) has/have an opening size of 10 - 90%, especially 25 - 75%, of the bottom area of the respective subcavity.

Such openings allow for further reducing the overall weight of the reinforcing member without losing significant strength.

Further preferred, the activatable material comprises one or more through-openings.

Especially, the through-opening(s) of the activatable material lie above the opening(s) of the side wall and/or the bottom area of the at least in one subcavity. This in particular such that there is a through opening from the outside of the side wall into the at least in one subcavity.

In particular, each of the subcavities having an opening in the bottom area communicate with an outside of the side wall.

The through opening(s) in the activatable material preferably has/have an opening size of 10 - 100%, especially 25 - 80%, of the opening size of the respective opening(s) of the side wall and/or in the bottom area of the subcavities over which they lie.

Preferably, a minimum width of the activatable material between neighbouring through-openings is 2 - 50 mm, especially 5 - 40, in particular 10 - 25 mm.

However, in another preferred embodiment, at least 50%, especially at least 75%, particularly 100%, of the outer surface of the side wall is covered with a continuous layer of activatable material.

As used for the present invention, the term activatable material is intended to mean a material that can be activated to cure, expand, soften, flow or a combination thereof upon exposure to a specific condition. The activatable material typically is configured in such a way that it can be activated thermally, by moisture and/or by electromagnetic radiation.

Especially, the activatable material is an expandable material. In principle, any desired material that can be made to foam in a controlled manner can be used as the expandable material. This material may or may not have reinforcing properties. In the present case, an expandable material with reinforcing properties is preferred for forming the connection the reinforcing member and the hollow structural member.

The expandable material typically is configured in such a way that it can be foamed thermally, by moisture and/or by electromagnetic radiation.

Such expandable materials typically comprise a chemical and/or a physical foaming agent. Chemical foaming agents are organic and/or inorganic compounds which decompose under the influence of temperature, moisture and/or electromagnetic radiation, at least one of the decomposition products being a gas. Compounds which transition into the gaseous state of aggregation when the temperature is increased may for example be used as physical foaming agents. As a result, both chemical and physical foaming agents are capable of creating foam structures in polymers.

The expandable materials are preferably foamed thermally, with chemical foaming agents being used. Examples of suitable chemical foaming agents are azodicarbonamides, sulfohydrazides, hydrogen carbonates or carbonates.

Suitable foaming agents are, for example, also commercially available under the trade name Expancel^{®} from Akzo Nobel, the Netherlands, or under the trade name Celogen^{®} from Chemtura Corp., USA. The heat required for the foaming can be introduced by external or by internal heat sources, such as an exothermic chemical reaction.

The expandable materials are preferably foamable at a temperature of <200°C, preferably <160°C, in particular of 80°C to 150°C, preferably of 90°C to 140°C. In particular, this is over a period of time of 10-60 min. In this way, said expandable materials can be foamed in already established process steps in vehicle manufacturing.

Examples of suitable expandable materials are single-component epoxy resin systems which do not flow at room temperature and in particular have an enhanced impact strength and contain thixotropic agents such as aerosils or nanoclays. For example, epoxy resin systems of this type include 20 to 50% by weight of a liquid epoxy resin, 0 to 30% by weight of a solid epoxy resin, 5 to 30% by weight of impact modifiers, 1 to 5% by weight of physical or chemical foaming agents, 10 to 40% by weight of fillers, 1 to 10% by weight of thixotropic agents and 2 to 10% by weight of heat-activatable catalysts. Suitable impact modifiers are reactive liquid rubbers based on nitrile rubber or derivatives of polyether polyol polyurethanes, core-shell polymers and similar systems known to a person skilled in the art.

Likewise suitable foamable materials are one-component polyurethane compositions containing foaming agents and based on crystalline polyesters comprising OH groups and mixed with further polyols, preferably polyether polyols, and polyisocyanates with blocked isocyanate groups. The melting point of the crystalline polyester should be >50°C. The isocyanate groups of the polyisocyanate can be blocked, for example by nucleophiles such as caprolactam, phenols or benzoxalones. Also suitable are blocked polyisocyanates such as are used, for example, in powder-coating technology and are commercially available, for example, under the trade names Vestagon^{®} BF 1350 and Vestagon^{®} BF 1540 from Degussa GmbH, Germany. Likewise suitable as isocyanates are so-called encapsulated or surface-deactivated polyisocyanates which are known to a person skilled in the art and are described, for example, in EP 0 204 970.

Also suitable as expandable materials are two-component epoxy/polyurethane compositions containing foaming agents, such as are described, for example, in WO 2005/080524 A1.

Also suitable as expandable materials are ethylene-vinyl acetate compositions containing foaming agents.

Likewise suitable expandable materials are sold, for example, under the trade name SikaBaffle^{®} 240, SikaBaffle^{®} 250, SikaBaffle^{®} 255, or SikaReinforcer^{®}-940 by Sika Corp., USA.

In one exemplary embodiment, the expansion rate of the expandable material is less than 500%, or less than 400%, or less than 300%. Expandable materials that are expandable to a lesser degree usually offer the advantage that they do not lose mechanical stability to an excessive degree on expansion.

Especially, the expandable material in expanded state has an E-modulus of at least 100 MPa or of at least 150 MPa or of at least 200 MPa. The values specified with respect to the modulus of elasticity relate to the expandable material in the state of use thereof. This means that the values are specified in particular after a possible expansion of the material and after a possible hardening of the material.

Components of the reinforcing member other than the activatable material, e.g. the walls and/or rips of the hollow body in particular are made from a non-expandable material. In the context of this invention, the expression "non-expandable" means that the volume of a material changes by not more than or by less than 10% when the process steps provided for the expanding the expandable materials are carried out. This is in particular at a temperature of up to 160°C, in particular of 80°C to 150°C, preferably of 90°C to 140°C. In comparison with the expandable material, the components of the reinforcing member other than the activatable material thus expands far less to not at all and remains substantially in its original shape even in the expanded state of the expandable materials.

Components of the reinforcing member other than the activatable material, e.g. the walls and/or rips of the hollow body, may consist of any desired materials.

Preferred materials are plastics, in particular polyurethanes, polyamides, polyesters and polyolefins, preferably high-temperature-resistant polymers such as poly(phenylene ethers), polysulfones or polyether sulfones, which may in particular also be foamed; metals, in particular aluminium and steel; or grown organic materials, in particular wood or other (densified) fibrous materials, or glass-type or ceramic materials; especially also foamed materials of this type; or any desired combinations of these materials. Polyamide, in particular polyamide 6, polyamide 6.6, polyamide 11, polyamide 12 or a mixture thereof, is particularly preferably used.

Combinations of the aforementioned materials with fibres, such as for example glass fibres or carbon fibres, are also possible, Glass fibre-reinforced plastics (GFRP) or carbon fibre-reinforced plastics (CFRP) are particularly preferred.

A further aspect of the present invention is directed a hollow structural member comprising a reinforcing element as described above.

Thereby, preferably, a central axis of the reinforcing element running from the back wall to the front wall is essentially parallel to a longitudinal axis of the hollow structural member.

Further preferred, the side wall of the reinforcing member runs essentially parallel to the longitudinal axis and/or parallel to at least one longitudinal boundary wall of the hollow structural member.

The reinforcing member preferably is connected to the hollow structural member, especially to the at least one longitudinal boundary wall, via the activatable material, in particular by an adhesive connection. Especially, there is no further mechanical connection, especially no screw connection, rivet connection and/or latching connection, between the reinforcing member and the hollow structural member.

In a highly preferred embodiment, the hollow structural member is a sill, especially a side sill, of a vehicle body. Thereby, preferably, the side wall of the reinforcing member is arrange in parallel to an inward oriented inner boundary wall or an outward oriented inner boundary wall of the sill, and the side wall of the reinforcing member is connected to the outward oriented inner boundary wall or the inward oriented inner boundary wall of the sill via the activatable material. Optionally, the reinforcing member is further connected to the inner bottom boundary wall or the inner top boundary wall of the sill via further activatable material.

Especially, the hollow structural member is a sill of a vehicle body with at least one crossmember protruding from the sill, especially in a direction perpendicular to a longitudinal direction of the sill, whereby the reinforcing element is arranged in a section of the sill from which the at least one crossbeam protrudes from the sill. Thereby, in case of pole impact events, acting forces can be optimally absorbed.

Preferably, the reinforcing element is configured and arranged in the sill so that it extends over the entire width of the crossmember in the area where the crossmember joins the sill.

Especially, a dimension of the reinforcing element in the longitudinal direction of the sill and/or along the axis from the back wall to the front wall is 100 to 200%, especially 105 to 150%, e.g. 110 to 125%, of the width of the crossmember in the area where the crossmember joins the sill.

A crossmember is meant to be a structural section that usually is transverse to the main structure of the vehicle body.

The crossmember for example is a floor crossmember, a seat crossmember, a rear side member and/or a mounting for a rear longitudinal member.

A further aspect of the present invention is directed to a vehicle body, in particular a body of an electrically driven vehicle, comprising a reinforcing member as described above or comprising a hollow structural member as described above.

A still further aspect of the present invention is directed to the use of a reinforcing member as described above for reinforcing a hollow structural member of a vehicle body, especially a sill of a vehicle body. Thereby, the hollow structural member and the vehicle body preferably are defined as described above.

Further advantageous implementations of the invention are evident from the exemplary embodiments.

### Brief description of drawings

The drawings used to explain the exemplary embodiments show:
- Fig. 1: a schematic, exemplary illustration of a body of a motor vehicle;
- Fig. 2: a perspective view of a reinforcing member comprising a rectangular cuboid hollow body with cuboid subcavities and activatable material at the side wall (i.e. the wall at the backside of Fig. 1);
- Fig. 3: a top view of the side wall of the reinforcing member of Fig. 2;
- Fig. 4: a top view of the front side of the reinforcing member of Fig. 2;
- Fig. 5: a top view of the side wall of another reinforcing member having activatable material at the side wall and at the bottom wall;
- Fig. 6: a top view of the bottom wall the reinforcing member of Fig. 5;
- Fig. 7: a perspective view of a further rectangular cuboid hollow body with rectangular openings in the side wall;
- Fig. 8: a perspective view of a further reinforcing member, which is based on the rectangular cuboid hollow body of Fig. 7;
- Fig. 9: a top view of the side wall of the reinforcing member of Fig. 8;
- Fig. 10: a longitudinal section through the upper part of the sill of Fig. 1 in the area of the seat crossmember whereby a reinforcing member as shown in Fig. 2 is placed and fixed in the hollow structure of the sill;
- Fig. 11: a cross-section along line A - A of Fig. 10.

### Exemplary embodiments

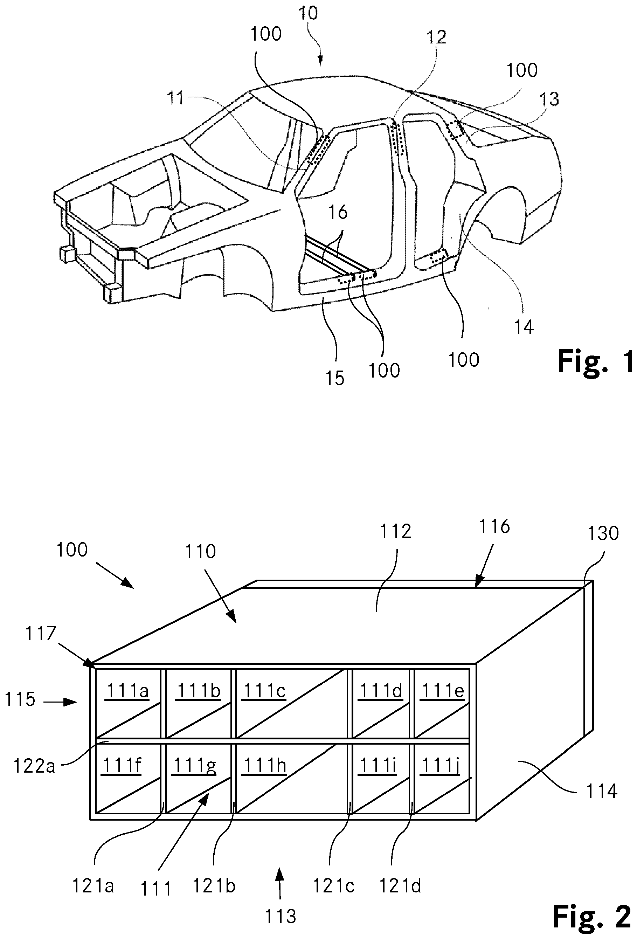

Fig 1. schematically illustrates a body 10 of a motor vehicle. In this context, the body 10 has various structural parts, such as for example the A-pillar 11, the B-pillar 12, the C-pillar 13, the wheel well 14, the side sill 15 or seat crossmembers 16. Such structural parts can now be reinforced by a reinforcing member 100 according to the invention, which are illustrated schematically in Fig. 1 as dashed elements.

Fig. 2 shows a reinforcing member 100 comprising a rectangular cuboid hollow body 110 having a cavity 111 that is confined by a front wall 115, a back wall 114, a top wall 112, a bottom wall 113, and a side wall 116. All of the walls, including the side wall 116, are fully closed and e.g. made of polyamide. Thus, only at the side 117 opposite the side wall 116, i.e. at the side shown at the front in Fig. 1, the cavity 111 is open.

Inside the cavity 111, there are ribs 121a - d running from the bottom wall 113 to the top wall 112 in parallel to the front wall 115 and back wall 114. A further rip 122a is running in a direction perpendicular to the rips 121a - d from the front wall 115 to the back wall 114. Due to the rips 121a - d and 122a, the cavity 111 is divided into several rectangular cuboid subcavities 111a - j extending form the side wall 116 to the open side opposite the side wall. The rips can be made of the same material as the walls, e.g. polyamide.

As evident from Fig. 2, the spacing between the rips 121a, 121b and 121c, 121d is smaller than the spacing between the rips 121b and 121c. Therefore subcavities 111c, 111h in a central section between the front wall 115 and the back wall 114 have a larger volume than subcavities 111a,e, f, j that are adjacent to the front wall 115 or the back wall 114.

The side wall 116 is coated with a continuous layer of an activatable material 130 for adhesively bonding the reinforcing member 100 to a hollow structural member.

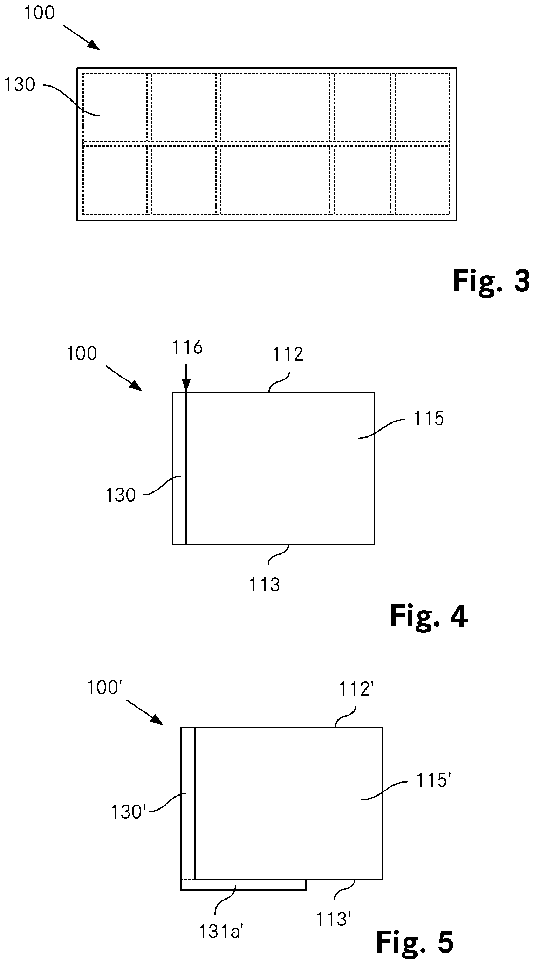

Fig. 3 shows a top view of the side wall 116 of the reinforcing member 100 of Fig. 2. The dashed lines indicate the outlines of the rips 121a - d, 122a and subcavities 111a - j behind the activatable material 130. Fig. 4 shows a top view of the front side 115 of the reinforcing member 100 of Fig. 2.

As evident from Fig. 2-4, with the reinforcing member 100, only the side wall 116 has the activatable material 130.

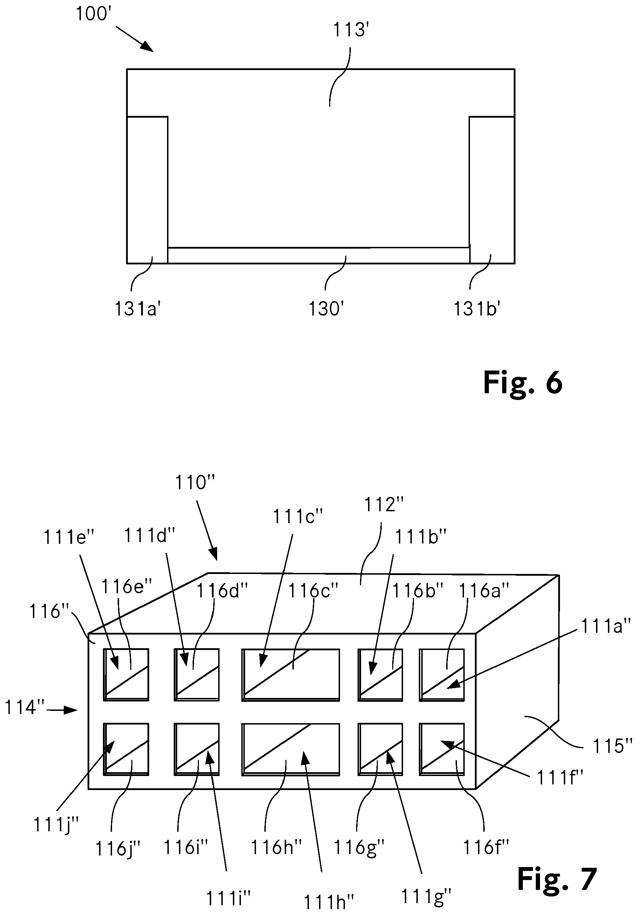

Fig. 5 and 6 show a second reinforcing member 100'. The second reinforcing member 100' is essentially identical in design to the reinforcing member 100 of Fig. 2. Elements of the second reinforcing member 100' which are identical to the respective elements of the reinforcing member 100, have the same reference signs with an apostrophe added at the end. New elements of the second reinforcing member 100' have a previously unassigned reference sign with an apostrophe at the end.

Specifically, the second reinforcing member 100' has the same rectangular cuboid hollow body and activatable material 130' at the side wall 116' as the reinforcing member 100 shown in Fig. 2. However, reinforcing member 100' has two stripes of further activatable material 131a', 131b' protruding sideways into the bottom wall 113'. Thereby, the further activatable material 131a', 131b' and the activatable material 130' are provided as a one-piece of material and consist of the same material. The further activatable material 131a', 131b' may be used to attach the reinforcing member 100' on a further side of a hollow structural member to avoid tilting movements.

Fig. 7 shows a further rectangular cuboid hollow body 110". The hollow body 110" is essentially identical in design to the hollow body 110 of Fig. 2 but has a different side wall 116". Elements of the cuboid hollow body 110" which are identical to the respective elements of the cuboid hollow body 110, have the same reference signs with two apostrophes added at the end. New elements of the cuboid hollow body 110" have a previously unassigned reference sign with two apostrophes at the end.

Specifically, each subcavity 111a" - j" has a rectangular opening 116a" - j" in the side wall 116" or the bottom area, respectively. The openings have an opening size of e.g. 85% of the bottom area of the respective subcavity.

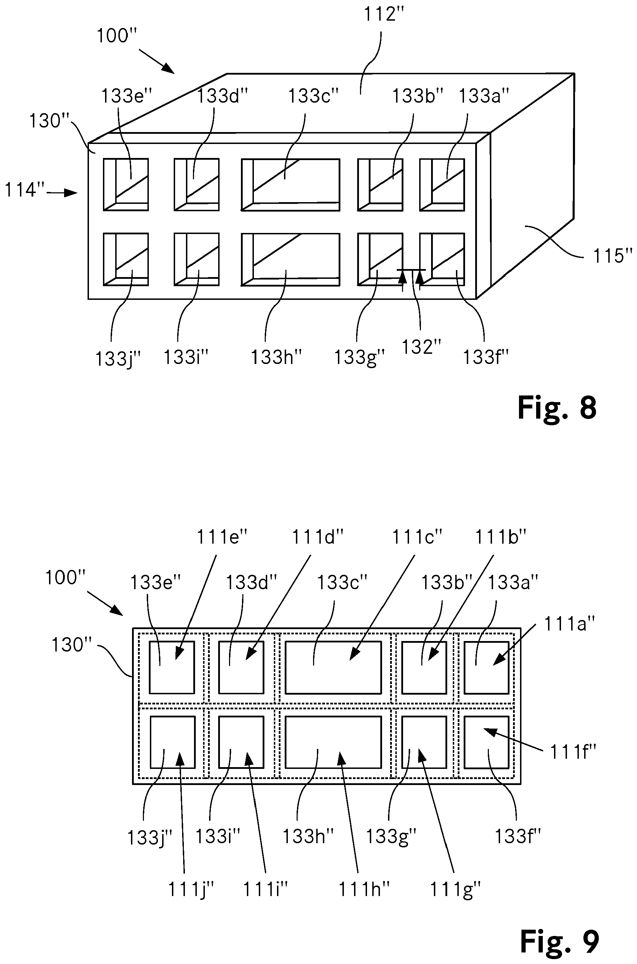

Fig. 8 shows a further reinforcing member 100", which is based on the rectangular cuboid hollow body 110" of Fig. 7. At the sidewall 116" of the cuboid hollow body 110", the further reinforcing member 100" comprises a layer of heat activatable material 130". In contrast to the embodiment of Fig. 2, the heat activatable material 130" comprises through-openings 133a" - j" which are identical in size to the rectangular openings 116a" - j" of the sidewall 116" and placed over them. Thus, in each subcavity 111a" - j" there is through opening from the outside of the side wall 116 into the respective subcavity.

Fig. 9 shows a top view of the side wall 116" of the reinforcing member 100" of Fig. 8. The dashed lines indicate the outlines of the rips 121a" - d", 122a" and the subcavities 111a" - j" behind the activatable material 130".

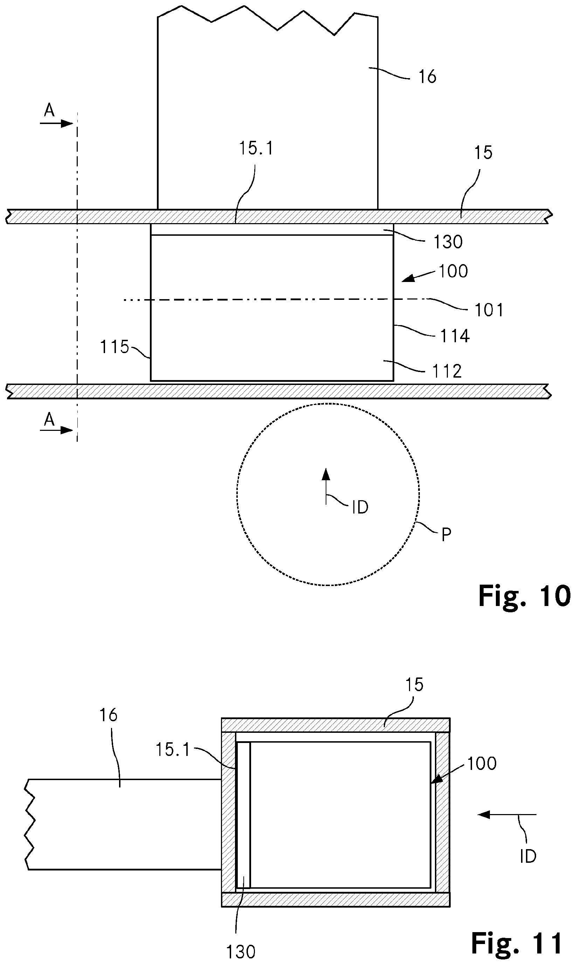

Fig. 10 shows a longitudinal section through the upper part of the sill 15 of Fig. 1 in the area of the seat crossmember 16, which protrudes perpendicularly from the sill 15. Fig. 11 shows a cross-section along line A - A of Fig. 10. Thereby, the reinforcing member 100 is placed in the hollow structure of the sill 15 with its longitudinal axis 101 running along the longitudinal axis of the sill 15. The activatable material 130 is in direct contact with a longitudinal boundary wall 15.1 of the sill, so that upon activation it will adhesively connect the reinforcing member 100 to the wall 15.1. The reinforcing member 100 is dimensioned such that its length in longitudinal direction of the sill 15 is slightly larger than the width of the seat crossmember 16.

In the event of a pole P impact in direction ID, acting forces can be optimally absorbed by the structure comprising the reinforcing member 100.

It will be appreciated by those skilled in the art that the present invention can be implemented in other specific forms without departing from the spirit or essential characteristics thereof. The presently disclosed implementations and embodiments are therefore considered in all respects to be illustrative and not restricted.

For example, instead of the reinforcing member 100, one of the reinforcing members 100', 100" can be used for reinforcing the sill 15 shown in in Fig. 10 and 11. In case of reinforcing members100', tilting of the reinforcing member in case of an impact can be reduced.

Also, the reinforcing member 100" of Fig. 8 and 9 can be provided with further activatable material at the bottom wall 113" or the top wall 112", similar to the embodiment shown in Fig. 5 and 6.

In another embodiment, reinforcing member 100" can be adapted such that only a part of the subcavities have through openings while other subcavities are fully closed at the bottom area, either by the side wall 116" or the activatable material 130" or both.

Likewise, with the reinforcing member 100 having fully closed side wall 116 a layer of activatable material with openings, e.g. similar to the ones shown in Fig. 8 or different ones, can be provided on the side wall 116. This might help to further reduce the weight of the reinforcing member 100.

Furthermore, with the arrangement shown in Fig. 10 and 11, the reinforcing member 100 can be arranged in an inverted position so that the activatable material is in contact with the inner boundary wall of the sill that is opposite the wall 15.1.

## Claims

1. A structural reinforcing member (100) for reinforcing a hollow structural member (11, 12, 13, 14, 15) of a vehicle body (10), whereby the reinforcing member (100) comprises a hollow body (110), whereby:
- the hollow body (110) comprises a cavity (111) that is confined by a front wall (115), a back wall (114), a top wall (112), a bottom wall (113), and a side wall (116);
- the hollow body (110) at a side of the side wall (116) is partly or fully closed by the side wall (116) and at a side (117) opposite the side wall (116) is open;
- and the hollow body (110) comprises ribs (121a - d, 122a) which run between opposing walls, such that the cavity (111) is divided into several subcavities (111a - j), especially extending form the side wall (116) to the open side (117) opposite the side wall (116);
- at least on the side wall (116), an activatable material (130) is arranged for adhesively bonding the reinforcing member (100) to a hollow structural member (15).

2. The structural reinforcing member according to claim 1, whereby the hollow body (110) has an essentially cuboid shape, especially an essentially rectangular cuboid shape.

3. The structural reinforcing member according to any of preceding claims, whereby further activatable material (131a', 131b') is arranged on the bottom wall (113') and/or the top wall (112'), and, preferably, all of the activatable material is provided as one-piece of material.

4. The structural reinforcing member according to any of preceding claims, whereby the activatable material covers at least 50%, especially at least 75%, in particular 100%, of the side wall (116).

5. The structural reinforcing member according to any of preceding claims, whereby only the side wall (116), and optionally the bottom wall (113) and/or the top wall (112), has the activatable material, especially only the side wall (116) has the activatable material (130).

6. The structural reinforcing member according to any of preceding claims, whereby the ribs (121a - d, 122a) are arranged such that a longitudinal axis of the subcavities is essentially perpendicular to the side wall (116).

7. The structural reinforcing member according to any of preceding claims, whereby the ribs (121a - d, 122a) are unevenly distributed in order to produce at least two types of subcavities with different volumes, whereby a distance between neighboring first ribs next to the front wall (115) and/or the back wall (114) is smaller than a distance between neighboring first ribs in a central section of the cavity (111).

8. The structural reinforcing member according to any of preceding claims, whereby, at least in one of the subcavities (121a - d, 122a), in particular in at least 50% of all subcavities, especially in each subcavity, there is an opening (116a" - j") in the side wall (116).

9. The structural reinforcing member according to any of preceding claims, whereby the activatable material (130) comprises one or more through-openings (133a" - j"), whereby, especially, the opening(s) of the activatable material lie above the openings of the side wall (116), such that there is a through opening from the outside of the side wall (116) into the subcavity/subcavities (121a - d, 122a).

10. The structural reinforcing member according to claim 9, whereby the through-opening(s) (133a" - j") in the activatable material has/have an opening size of 10 - 100%, especially 25 - 80%, of the opening size of the respective opening(s) (116a" - j") of the side wall (116) over which the they lie.

11. Hollow structural member (15) comprising a reinforcing member according to any of preceding claims, whereby an axis (101) of the reinforcing member (100) running from the back wall (114) to the front wall (115) is essentially parallel to a longitudinal axis of the hollow structural member (15) and the side wall (116) of the reinforcing member (100) runs essentially parallel to the longitudinal axis (101) and/or parallel to at least one longitudinal boundary wall (15.1) of the hollow structural member (15).

12. Hollow structural member according to claim 11, whereby the reinforcing member (100) is connected to the hollow structural member (15), especially to the at least one longitudinal boundary wall (15.1), via the activatable material (130).

13. Hollow structural member according to any of claims 11 to 12, whereby the hollow structural member (15) is a side sill of a vehicle body (10), and, preferably, the hollow structural member (15) is a side sill of a vehicle body (10) with at least one crossmember (16) protruding from the side sill, especially in a direction perpendicular to a longitudinal direction of the side sill, whereby the reinforcing element (100) is arranged in a section of the side sill from which the at least one crossbeam (16) protrudes from the sill.

14. Vehicle body (10) comprising a reinforcing member (100) according to any of claims 1 - 10 or a hollow structural member according to any of claims 11 to 13.

15. Use of a reinforcing member according to any of claims 1 to 10 for reinforcing a hollow structural member (11, 12, 13, 14, 14) of a vehicle body (10), especially a side sill of a vehicle body (10).
